# EUROPEAN PATENT APPLICATION

(11) **EP 1 170 622 A1**
(43) Date of publication of application: **09.01.2002**
(21) Application number: 01904388.4
(22) Date of filing: 13.02.2001
(51) Int. Cl.: G02F 1/133, G09G 3/36

(54) **DISPLAY AND METHOD FOR DRIVING THE SAME**

(30) Priority: 10.02.2000 JP 2000032907
(71) Applicant: MATSUSHITA ELECTRIC INDUSTRIAL CO., LTD., Kadoma-shi, Osaka 571-8501 (JP)
(72) Inventor: WAKITA, Naohide, Suita-shi, Osaka 564-0034 (JP)
(74) Representative: Dempster, Benjamin John Naftel
(86) International application number: JP0100970
(87) International publication number: WO0159512

(57) **Abstract**

The invention provides a display device which eliminates flicker phenomenon and reduces power consumption in the display device, and a driving method of the device. At least two adjacent pixels satisfy a relationship such that the time variations of luminance (18) and luminance (19) are opposite.

## Description

### TECHNICAL FIELD

The present invention relates to a display element and a method of driving the element.

### BACKGROUND ART

Although there are various types of electronic displays, a universal principle is that moving pictures are displayed by refreshing images at a predetermined cycle. Refresh frequencies of electronic displays are normally set at 60 Hz or higher. This is because, at less than 60 Hz, the human eye is sensitive to flicker. In such displays that the viewer is required to gaze at the display screen for long periods of time, for example, in displays for VDT operation, it is necessary that the refresh frequency be set at about 120 Hz, for example, to reduce the viewer's eye strain.

Meanwhile, the amount of power consumed by a display device is proportional to the applied voltage and the refresh frequency. Therefore, the lower the refresh frequency is, the lower the power consumption. In mobile telephones and office automation appliances, the displays show still pictures, in which there is little motion, most of the time. In addition, in appliances using a storage battery as a power source, such as in mobile telephones, it is desirable that the refresh frequency be made as low as possible to save the power consumed. However, when the refresh frequency is lowered, flicker tends to be more easily perceived. For these reasons, in the cases of still pictures, at which the viewer tends to gaze, flicker needs to be suppressed to reduce viewer's eye strain while the frequency also needs to be lowered.

CRT television sets or the like employ interlace driving, in which image data are written to every other row and a complete frame is written by carrying out the scanning operation twice. With interlace driving, even if the refresh frequency for a single frame, in which the whole screen is refreshed, is set at 30 Hz, the observed refresh frequency becomes 60 Hz and thereby flicker is not perceived because the pixels in adjacent rows show similar colors having similar luminances in most cases. This principle is also adopted in liquid crystal display devices.

In the case when the interlace driving is employed, however, when adjacent rows have greatly different luminances, for example, when the displayed image is a portrait of a person wearing a horizontally striped shirt, the observed frequency is not heightened and flicker occurs at the portions of the horizontal stripes.

### DISCLOSURE OF THE INVENTION

As discussed above, depending on the types of images, the prior art techniques do not always function well. In addition, the prior art techniques employ such systems that when adjacent pixels are written, the phases are shifted to superficially increase the observed frequency of luminance variations, and therefore, when the driving frequency is excessively reduced, flicker cannot be sufficiently suppressed and consequently the picture quality is degraded. Thus, the prior art techniques cannot achieve the object of reducing the power consumption while maintaining the picture quality. The object of the present invention is, therefore, to provide a solution to this problem in the prior art.

In the present invention, which comprises the following embodiments, the amplitude itself of luminance variations in the adjacent pixels is suppressed. Therefore, the effect of preventing flicker is great, and the display quality does not degrade even when the frequency is lowered. As a consequence, according to the present invention, a display element with little flicker and reduced power consumption is achieved. The embodiments of the present invention are presented in the following:
(1) The invention provides a display element comprising: a multiplicity of pixels having a light modulating medium and a pixel electrode; and a voltage applying means for sequentially selecting a specific pixel from the multiplicity of pixels and applying a signal voltage thereto in accordance with an image signal; wherein each of the pixels has a differential coefficient df(t)/d(t) obtained by differentiating the real function f(t) representing the time variation of the output light intensity of the pixel after the signal voltage has been applied thereto, and each of the pixels satisfies a relationship with at least one adjacent pixel thereto such that the differential coefficients df(t)/d(t) have opposite signs.
   With this embodiment, the amplitude of time variation of luminance is suppressed in the adjacent pixels, and consequently, flicker does not easily occur. In addition, this effect of suppressing the amplitude of time variation of luminance is obtained even when the driving frequency is small, and therefore, by employing this embodiment, it is made possible to sufficiently reduce the driving voltage of the display element. Thus, by this embodiment, a display element with low power consumption is achieved.
(2) In the first embodiment of the invention described above, the display element may further comprise display blocks each composed of two adjacent pixels satisfying the relationship wherein the differential coefficients df(t)/d(t) have opposite signs; and the voltage applying means may apply the signal voltage to each of the display blocks in accordance with the image signal.
   With this embodiment, the amplitude of time variation of luminance is reliably suppressed, and thereby flicker is very effectively prevented.
(3) In the second embodiment of the invention described above, the two pixels in each of the display blocks may have, in the absence of an electric field, display states such that one is a bright state while the other is a dark state.
   With this embodiment, the amplitude of time variation of luminance is further suppressed, and thereby the occurrence of flicker is remarkably suppressed.
(4) In the second or third embodiment of the invention, the light modulating medium may be liquid crystal.
   Liquid crystal display elements offer low power consumption and light weight, and thus are suitable for display elements for portable devices using storage batteries as their power supplies. When the present invention is applied to the liquid crystal display elements, further reduction in power consumption is expected in addition to prevention of flicker, thus enhancing the usefulness of portable devices.
(5) In the display element of the first embodiment of the invention described above, any two adjacent pixels in the multiplicity of pixels may satisfy the relationship wherein the differential coefficients df(t)/d(t) have opposite signs.
   With this embodiment, flicker is reliably suppressed.
(6) In the display element of the fifth embodiment of the invention described above, the display element may further comprise display blocks each composed of two adjacent pixels satisfying the relationship wherein the differential coefficients df(t)/d(t) have opposite signs, and the voltage applying means may apply the signal voltage to each of the display blocks in accordance with the image signal.
(7) In the display element of the sixth embodiment of the invention described above, the two pixels in each of the display blocks may have, in the absence of an electric field, display states such that one is in a bright state while the other is in a dark state.
(8) In a display element of the sixth or the seventh embodiment of the invention, the light modulating medium may be liquid crystal.
   The present invention also provides driving methods, which are disclosed below.
(9) The invention also provides a method of driving a display element, the display element comprising a multiplicity of pixels having a light modulating medium and a pixel electrode, and a voltage applying means for sequentially selecting a specific pixel from the multiplicity of pixels and applying a signal voltage thereto in accordance with an image signal, the display element wherein each of the pixels has a differential coefficient df(t)/d(t) obtained by differentiating the real function f(t) representing the time variation of the output light intensity of the pixel after the signal voltage has been applied thereto, and each of the pixels satisfies a relationship with at least one adjacent pixel thereto such that the differential coefficients df(t)/d(t) have opposite signs, the method characterized in that, a driving frequency for applying the signal voltage is set at less than 60 Hz.
(10) In the ninth embodiment of the invention described above, which relates to a driving method, the signal voltage may be generated such that _{Y} characteristics are different between each of the pixels and at least one adjacent pixel thereto, the _{Y} characteristics specifying the relationship between the image signal and the signal voltage, and the generated signal voltage may be applied to each of the pixels.
(11) In the ninth or the tenth embodiment of the invention, which relates to a driving method, whether a picture to be displayed is a still picture or a moving picture may be determined, and only when the picture is determined to be a still picture, the driving frequency for applying the signal voltage may be set at less than 60 Hz.
   The present invention also provides an image display device which employs a display element as described above, and the configurations are disclosed below.
(12) The invention provides an image display device including a display element comprising a multiplicity of pixels having a light modulating medium and a pixel electrode and a voltage applying means for sequentially selecting a specific pixel from the multiplicity of pixels and applying a signal voltage thereto in accordance with an image signal; wherein each of the pixels has a differential coefficient df(t)/d(t) obtained by differentiating the real function f(t) representing the time variation of the output light intensity of the pixel after the signal voltage has been applied thereto, and each of the pixels satisfies a relationship with at least one adjacent pixel thereto such that the differential coefficients df(t)/d(t) have opposite signs; a signal converting means for converting an image data to an image signal; and a controlling means for controlling the voltage applying means based on a signal received from the signal converting means.
(13) In the above-described 12th embodiment of the invention, the image display device may further comprise a flag signal generating means for generating a flag signal for determining whether the image data is for a still picture or for a moving picture, and the device may be such that the controlling means receives a signal from the signal converting means and a signal from the flag signal generating means and controls the voltage applying means so that, when the image data is for a still picture, the device is driven at a lower frequency than a driving frequency for a moving picture.
   With this embodiment, power consumption as well as flicker is reduced without degrading the picture quality of moving pictures.
(14) In the image display device according to the 12th or 13th embodiment of the invention, the light modulating medium of the display element may be liquid crystal.

### BRIEF DESCRIPTION OF THE DRAWINGS

Fig. 1 is a schematic plan view illustrating a display element according to the present invention.
Fig. 2 is a luminance-voltage characteristic graph illustrating the principle of the display element according to the present invention.
Fig. 3 is a graph for illustrating the principle of the display element according to the present invention, which shows the relationship between time and luminance after writing.

### BEST MODE FOR CARRYING OUT THE INVENTION

### Example

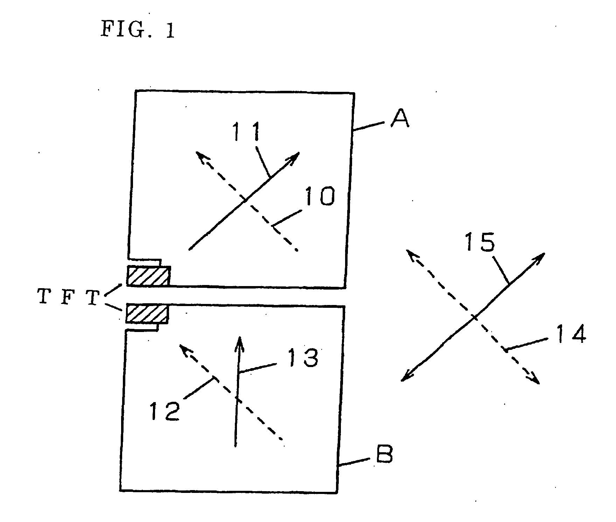

Taking a case of a liquid crystal display element as an example, the present invention is detailed below. Fig. 1 is a schematic plan view illustrating two adjacent pixels A, B of a liquid crystal display element according to the invention. The liquid crystal display element of the present example comprises, between a pair of substrates, a pixel electrode (note that in the present example, the pixel electrode is made up of a driving electrode and a common electrode), a TFT (thin film transistor) for controlling the driving electrode, a TN liquid crystal serving as a light modulating medium, and an alignment film for regulating the alignment in the TN liquid crystal. The driving electrode and the TFT are provided over one of the substrates (hereafter referred to as a first substrate), and a liquid crystal alignment film is provided thereover. Over the other one of the substrates (hereafter referred to as a second substrate), at least a common electrode is provided, and a liquid crystal alignment film is also formed thereover. The TN liquid crystal is sealed between the pair of substrates, and on each opposing outer side face of the pair of substrates, a polarizing plate is disposed so that the light polarization directions are perpendicular to each other, as shown by the arrows 14 and 15.

If required, a color filter or the like may be additionally provided between the pair of substrates.

Note that the pixels A and B in the liquid crystal display element comprise a pixel electrode, a TFT, liquid crystal, and a liquid crystal alignment film, but, for the sake of clarity and brevity in the drawings, these constituent elements are not explicitly shown in Fig. 1. In Fig. 1, reference numerals 11 and 13 in the pixels A and B represent the alignment directions on the surface of the second substrate (which defines the viewer side), and reference numerals 10 and 12 represent an alignment direction on the surface of the first substrate. As shown in this figure, the pixel A (reference numerals 10 and 11) is in TN mode, in which the liquid crystal molecules are aligned to have a 90-degree twist, whereas the pixel B (reference numerals 12 and 13) is in a birefringence mode in which the liquid crystal molecules are aligned to have a 45-degree twist.

In the image display device of the present example, the pixel A and the pixel B together constitute a single display block. Specifically, a controlling means is provided and the controlling means controls a voltage applying means (a means for applying a signal voltage) so that the pixel A and the pixel B display the same image element.

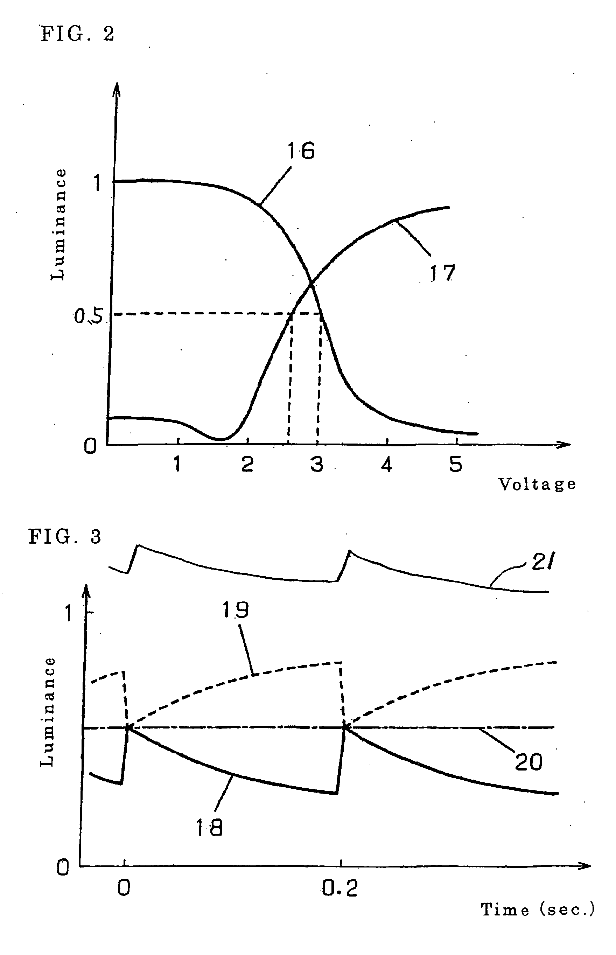

Fig. 2 shows a characteristic graph illustrating the relationship between applied voltages to the pixels A and B and luminances thereof. The pixel A is, as seen from the luminance-voltage curve 16, in a so-called normally white mode, in which the pixel is in a bright state in the absence of an applied electric field and the luminance decreases as the applied voltage increases. The pixel B is, on the other hand, as seen from the luminance-voltage curve 17, in a so-called normally black mode, in which the pixel is in a dark state in the absence of an applied electric field and the luminance increases as the applied voltage increases. Accordingly, where the same image data are displayed in the pixel A and the pixel B, the observed luminance is that obtained by synthesizing the luminance curve for the pixel A and the luminance curve for the pixel B, and is therefore always constant. Therefore, flicker does not occur.

Note here that the relationships between the output lights and the applied signal voltages for the pixel A and the pixel B, i.e., the _{Y} characteristics of the pixel A and the pixel B, are normally different from each other. Accordingly, if the same luminance is required in the pixel A and the pixel B, it is necessary that different predetermined voltages be applied to each of the pixels. For example, assuming that the luminance level of a pixel is 0.5, which is exactly the median level in gray scale display of 0-1, the pixel A requires a voltage of 3 V while the pixel B requires a voltage of 2.6 V, so as to obtain the same luminance in both the pixel A and the pixel B.

Fig. 3 shows the time variation of luminance in a case where the TFT is turned ON to apply a signal voltage to the liquid crystal layer and thereafter is turned OFF. As shown in Fig. 3, when a signal voltage is applied to the liquid crystal layer at the points of time of 0 second and 0.2 seconds along the time axis (horizontal axis), the electric charge stored in the liquid crystal layer is gradually discharged by the resistance component of the liquid crystal layer, and therefore, the voltage actually being applied to the liquid crystal layer gradually decreases as shown by the curve 21. Here, as shown by the solid line 18, the luminance of the pixel A gradually decreases as the applied voltage decreases by discharging, whereas, as shown by the dotted line 19, the luminance of the pixel B gradually increases as the applied voltage decreases. As a consequence, the observed luminance obtained by adding the luminances of both of the pixels is as shown by the dash-dot line 20, which shows substantially no variation.

In the example shown in Fig. 3, the absolute values of the amounts of luminance variations versus elapsed time are almost the same in the pixel A and the pixel B, but it has been confirmed that the effect of preventing flicker is obtained even if the absolute values of the amounts of luminance variation are not the same, insofar as a relationship is satisfied such that the directions of time variations of the luminances in adjacent pixels are opposite, that is, a relationship is satisfied such that the differential coefficients of the amounts of time variations of the luminances in adjacent pixels have opposite signs.

In conventional display elements, for example in a display element having only normally white mode pixels, when the refresh frequency was reduced to less than 60 Hz, flicker became apparent in halftone, which was unpleasant for the viewer. By contrast, in the display element of the present invention, the amplitude of luminance variation versus time was suppressed as shown in Fig. 3, and therefore, flicker was not detected even when the frequency was reduced to 5 Hz.

In the present example, a display block is constituted by two pixels, and therefore, the density of display blocks correspondingly decreases. Even so, it was confirmed that when the refresh frequency was reduced to one-twelfth, a sufficient picture quality was ensured, and the amount of power consumed was thereby reduced to 1/6.

### Miscellaneous

(1) Using a display element of the present invention, an image display device may be constructed incorporating a signal converting means for converting an image data to an image signal and a controlling means for controlling the voltage applying means in the display element in response to a signal received from the signal converting means. This achieves an image display device with reduced flicker and low power consumption.
   In addition, this image display device may further comprise a flag signal generating means which generates a flag signal for determining whether the image data is for a moving picture or for a still picture, and the device may be configured such that, when the signals supplied from the flag signal generating means represent still pictures, the frequency of writing is lower than that for moving pictures. This achieves an image display device with even lower power consumption. As for the criteria to determine whether a picture is a still picture or a moving picture, the MPEG-4 standard may be used, which specifies data compression systems for mobile telecommunications. The MPEG-4 standard is expected to be used in the next generation of mobile telephones and includes data relating to motion in pictures, which can be utilized to determine whether a picture is a moving picture or a still picture. It is not preferable that the determination of whether a picture is a still picture or a moving picture is carried out by the display element side, because it increases the complexity of the circuitry, thus increasing the power consumption. For this reason, it is preferable that a device other than the display element (electronic device side) be provided with a circuit which transfers the image data and, at the same time, determines whether a still picture or a moving picture and performs the processing (such as a signal converting means and a flag signal generating means). This configuration makes it possible to smoothly perform the switching of driving frequencies between that for still pictures and that for moving pictures, achieving both the reduction in power consumption and the improvement in picture quality. This configuration is particularly useful for portable electronic appliances driven with storage batteries.
   It is noted here that, according to the present invention, when the driving frequency is lower than 60 Hz, it is possible to obtain still pictures with sufficient picture quality. Nevertheless, in order to achieve further reduction in the power consumption, it is preferable that the driving frequency be lower than 30 Hz, and more preferably, be less than 10 Hz.
   In a large sized image display device which is driven with a general power supply, such as ones for personal computers or the like, power consumption is not likely to be as big an issue as it is with portable devices. Therefore, the necessity of switching frequencies for moving pictures and still pictures is not great.
(2) In the present specification, the smallest unit that can be driven by a voltage is referred to as a "pixel", and a unit for displaying an image is referred to as a "display block". The above example shows an example in which two adjacent pixels constitute a single display block, but having as its element such a relationship between adjacent pixels that the differential coefficients of the amounts of the temporal variations in luminance in the adjacent pixels have opposite signs, the present invention exhibits the the same advantages and effects even when the display block is composed of a single pixel. One of the reasons is that the present invention suppresses the amplitude of the temporal variation in luminance itself; another reason is that, in most cases, the image data displayed in adjacent pixels are almost the same, and therefore the adjacent pixels practically function as a single display block in many cases.
(3) The above example shows an example of active matrix drive liquid crystal display element, but even in the case of a simple matrix drive, similar advantages and effects to those in the above example are obtained since the simple matrix drive also has the same situation where the luminance at a selected time varies in a non-selected time.
(4) Further, although an example of a liquid crystal display element is shown in the above example, the applications of the present invention are not limited thereto. One example of a display element which the present invention can be applied to, other than the liquid crystal display element, is an electrophoretic image display (EPID). An electrophoretic image display is such a system that microparticles in a colored liquid are moved with voltage to carry out the switching of color between the color of the microparticles and the color of the liquid to display so as to display images. In the electrophoretic image display, a normally white state and a normally colored state (for example normally black) are switched according to voltage polarity. Therefore, by reversing the polarities between adjacent pixels, it is possible to make opposite the differential values of the output light verses time. That is, the present invention can be applied thereto, and thereby the advantages and effects specified by the present invention are obtained.

Another specific example which the present invention can be applied to is a digital mirror device (DMD) in which micro mirrors are tilted by voltage application to modulate light. In a digital mirror device, micro mirrors have corresponding functions to the pixels, and by varying the angles of adjacent mirrors, the switching between a normally white mode and a normally black mode is made possible. Therefore, in a similar manner to that discussed above, the present invention may be suitably applied thereto, and by applying the present invention, similar advantages and effects to those discussed above are obtained.

### INDUSTRIAL APPLICABILITY

According to the present invention, adjacent pixels compensate for each other's luminance variations, and therefore, the amplitude accompanying the luminance variation is small. Consequently, the present invention suppresses flicker even when the driving frequency is reduced, achieving a display element with low power consumption and high picture quality. Thus, the present invention has various uses in the industry.

## Claims

1. A display element comprising:
a multiplicity of pixels having a light modulating medium and a pixel electrode; and
a voltage applying means for sequentially selecting a specific pixel from the multiplicity of pixels and applying a signal voltage thereto in accordance with an image signal;
wherein each of the pixels has a differential coefficient df(t)/d(t) obtained by differentiating the real function f(t) representing the time variation of the output light intensity of the pixel after the signal voltage has been applied thereto, and each of the pixels satisfies a relationship with at least one adjacent pixel thereto such that the differential coefficients df(t)/d(t) have opposite signs.

2. A display element according to claim 1, wherein:
the display element further comprises display blocks each composed of two adjacent pixels satisfying the relationship wherein the differential coefficients df(t)/d(t) have opposite signs; and
the voltage applying means applies the signal voltage to each of the display blocks in accordance with the image signal.

3. A display element according to claim 2, wherein, in the absence of an electric field, the two pixels in each of the display blocks have display states such that one is a bright state while the other is a dark state.

4. A display element according to claim 3, wherein the light modulating medium is liquid crystal.

5. A display element according to claim 1, wherein any two adjacent pixels in the multiplicity of pixels satisfy the relationship wherein the differential coefficients df(t)/d(t) have opposite signs.

6. A display element according to claim 5, wherein:
the display element further comprises display blocks each composed of two adjacent pixels satisfying the relationship wherein the differential coefficients df(t)/d(t) have opposite signs; and
the voltage applying means applies the signal voltage to each of the display blocks in accordance with the image signal.

7. A display element according to claim 6, wherein, in the absence of an electric field, the two pixels in each of the display blocks have display states such that one is in a bright state while the other is in a dark state.

8. A display element according to claim 7, wherein the light modulating medium is liquid crystal.

9. A method of driving a display element, the display element comprising a multiplicity of pixels having a light modulating medium and a pixel electrode, and a voltage applying means for sequentially selecting a specific pixel from the multiplicity of pixels and applying a signal voltage thereto in accordance with an image signal, the display element wherein each of the pixels has a differential coefficient df(t)/d(t) obtained by differentiating the real function f(t) representing the time variation of the output light intensity of the pixel after the signal voltage has been applied thereto, and each of the pixels satisfies a relationship with at least one adjacent pixel thereto such that the differential coefficients df(t)/d(t) have opposite signs, the method **characterized in that**:
a driving frequency for applying the signal voltage is set at less than 60 Hz.

10. A method of driving a display element according to claim 9, wherein the signal voltage is generated such that _{Y} characteristics are different between each of the pixels and at least one adjacent pixel thereto, the _{Y} characteristics specifying the relationship between the image signal and the signal voltage, and the generated signal voltage is applied to each of the pixels.

11. A method of driving a display element according to claim 9, wherein, whether a picture to be displayed is a still picture or a moving picture is determined, and only when the picture is determined to be a still picture, the driving frequency for applying the signal voltage is set at less than 60 Hz.

12. An image display device including:
a display element comprising a multiplicity of pixels having a light modulating medium and a pixel electrode and a voltage applying means for sequentially selecting a specific pixel from the multiplicity of pixels and applying a signal voltage thereto in accordance with an image signal; wherein each of the pixels has a differential coefficient df(t)/d(t) obtained by differentiating the real function f(t) representing the time variation of the output light intensity of the pixel after the signal voltage has been applied thereto, and each of the pixels satisfies a relationship with at least one adjacent pixel thereto such that the differential coefficients df(t)/d(t) have opposite signs;
a signal converting means for converting an image data to an image signal; and
a controlling means for controlling the voltage applying means based on a signal received from the signal converting means.

13. An image display device according to claim 12, further comprising:
a flag signal generating means for generating a flag signal for determining whether the image data is for a still picture or for a moving picture;
wherein the controlling means receives a signal from the signal converting means and a signal from the flag signal generating means and controls the voltage applying means so that, when the image data is for a still picture, the device is driven at a lower frequency than a driving frequency for a moving picture.

14. An image display device according to claim 13, wherein the light modulating medium is liquid crystal.
